# EUROPÄISCHE PATENTSCHRIFT

(11) **EP 2 995 640 B1**
(45) Veröffentlichungstag und Bekanntmachung des Hinweises auf die Patenterteilung: **26.04.2017**
(21) Anmeldenummer: 15002603.7
(22) Anmeldetag: 04.09.2015
(51) Int. Cl.: C08J 5/04, C08K 7/06, C08L 61/06

(54) **Faserverstärktes härtbares Kunststoffgranulat**
Fiber reinforced curable plastic granules
Granulés de plastique durcissables renforcés par des fibres.

(30) Priorität: 12.09.2014 DE 102014013243
(43) Veröffentlichungstag der Anmeldung: 16.03.2016
(73) Patentinhaber: Hexion GmbH, 58642 Iserlohn-Letmathe (DE)
(72) Erfinder: Löhl, Thomas, 44137 Dortmund (DE); Reinwald, Karl-Heinz, 58640 Iserlohn (DE)

(56) Entgegenhaltungen:
- DE-A1- 19 519 241
- DE-A1-102009 023 529
- US-B1- 6 194 071
- DATABASE WPI Week 199816 Thomson Scientific, London, GB; AN 1998-175106 XP002748830, & JP H10 36631 A (FUDO KK) 10. Februar 1998 (1998-02-10)
- DATABASE WPI Week 198314 Thomson Scientific, London, GB; AN 1983-33624K XP002748831, & JP S58 34856 A (ASAHI YUKIZAI KOGYO KK) 1. März 1983 (1983-03-01)

## Beschreibung

Die Erfindung bezieht sich auf ein faserverstärktes härtbares Kunststoffgranulat, deren Herstellung und Verwendung.

Die Verwendung von Fasern für die Verstärkung von Kunststoffen (Composite-Material) ist seit vielen Jahren bekannt. So werden Kunststoffe u. a. durch Materialien wie Kohle, Glas, Keramik, Bor, Basalt, synthetischen und/oder natürlichen Polymeren in Form von Fasern (z. B. kurze Fasern oder Endlosfasern), Gelegen, Vliesen, Gewirken, Wirrfasermatten und/oder Geweben verstärkt. Insbesondere hat in den letzten Jahren die Bedeutung an Karbonfasern (Kohlefaser) zur Verstärkung von Kunststoffen zugenommen.

Die Herstellung von Karbonfasern erfolgt mit Hilfe spezieller technischer Verfahren in feinsten Fäden (Filamente), in der Regel in einem Durchmesser von 2-5 µm. Als Ausgangsmaterial dienen z. B. Fasern aus Polyacrylnitril (PAN), die in einem kontrollierten thermischen Prozess bis ca. 1.600 °C unter Erhalt der Faserstruktur zu reinem Kohlenstoff abgebaut werden. Durch die Anordnung der Filamente entstehen Fasern, die eine hohe Zugfestigkeit und Steifigkeit bei geringstem Gewicht, eine hervorragende elektrische Leitfähigkeit, eine Transparenz unter dem Röntgenschirm und eine sehr gute Beständigkeit gegen Chemikalien und Temperatur aufweisen. Weiterhin ist vorteilhaft, dass sie eine einfache Verarbeitung (ähnlich wie Glasfasern) ermöglichen. Aus diesem Grunde werden Karbonfasern bzw. in weiter verarbeiteter Gestalt in Form von z. B. Rovings, Bänder, Schläuchen, Gewebe oder Vliesen u. a. eingesetzt in der Luft- und Raumfahrt, Medizintechnik, Fahrzeugbau, Modellbau, im Motorsport und bei der Herstellung von Sportartikeln. Je nach Anwendung liegen die Karbonfasern häufig eingebettet in einer Kunststoffmatrix vor und dienen, wie bereits erwähnt, zur Verstärkung des gesamten Produktes.

Bisher gibt es zahlreiche Möglichkeiten, die sich mit dem Recyceln von Karbonfasern, die in der Kunststoffmatrix eingebettet sind, beschäftigen. So wird unter anderem in der EP 720973 A2 ein Verfahren zum Wiederverwerten von Kohlenstofffasern enthaltenden Abfällen oder Reststücken beschrieben, bei dem das Composite-Material in Stücke gebracht wird, anschließend gepresst und verkokt wird. Die entstandenen Produkte sind u. a. für Brems-und Reibbeläge oder thermische Isolierplatten geeignet. DE 195 19 241 A1 offenbart in Beispiel 9 die Benutzung von Recycling -Kohlenfasern mit Phenolharz. Die Fasern weisen eine Länge von 10 bis 100 mm (> 2 mm) auf. Vor der Tränkung werden Sie als ungewebtes Gespinst verarbeitet. Abgesehen vom Recyceln von karbonfaserverstärkten Kunststoffen treten aber auch bereits beim Zuschneiden von Karbonfasern an sich bzw. in Form von Rovings, Bänder, Schläuchen, Gewebe oder Vliesen Abfälle auf, die einer Wiederverwendung zugeführt werden. Allerdings ist es bisher schwierig, sehr feine Karbonfaserabfälle, die z.B. in Absauganlagen oder Filtereinrichtungen der Verarbeitungsanlagen anfallen, zu entsorgen bzw. zu recyceln. Das ist besonders wichtig, da eine Gesundheitsgefährdung bei der Verarbeitung durch feine Stäube bzw. Fasern generell nie ausgeschlossen werden kann. Aufgrund der spezifischen Eigenschaften, des geringen Durchmessers (ca. 2-5 µm) der einzelnen Karbonfaserfilamente und der Länge (< 2 mm) bilden diese Abfälle - einer weiteren Verarbeitung erschwerend - wirre Knäule, die staubflusenartig und steif sind, auch sogenannte Wollmäuse in steifer Form. Diese sind aufgrund ihres großen Volumens, der geringen Dichte und der Steifigkeit schlecht handhabbar und dosierbar. Die im Stand der Technik bekannten Dosiervorrichtungen für faserartige Füllstoffe versagen in der Regel bei der vorliegenden Konsistenz der Karbonfasern in wirren Knäulen.

Die Aufgabe der hier vorliegenden Erfindung besteht darin, eine Möglichkeit zu finden, Karbonfasern, die in Form von wirren Knäulen mit einer durchschnittlichen Faserlänge von < 2 mm vorliegen, einer industriellen Verwertung zuzuführen.

Gelöst wird diese Aufgabe erfindungsgemäß durch die Bereitstellung eines härtbaren Kunststoffgranulats entsprechend der Merkmale des Anspruchs 1.

Es war überraschend, dass diese wirren Karbonfaserknäule mit einer durchschnittlichen Faserlänge von < 2 mm in der Lage sind, in Kombination mit einem härtbaren Harz rieselfähige Massen bilden. Aufgrund der Konsistenz der wirren Karbonfaserknäule konnte nicht erwartet werden, dass diese in ausreichendem Maße mit einem Harz imprägniert werden können, so dass letztendlich ein rieselfähiges Karbonfaser verstärktes härtbares Kunststoffgranulat entsteht. Ebenfalls überraschend war die Tatsache, dass die durchschnittliche Faserlänge der wirren Karbonfaserknäule in dem rieselfähigen Granulat sich nur unwesentlich gegenüber der Ausgangslänge des Rohstoffs geändert hat, obwohl die durch den Mischprozess eingetragene mechanische Energie einen Abbau der durchschnittlichen Faserlänge erwarten ließ.

Die zur Verstärkung verwendeten Karbonfasern liegen in Form von wirren Knäulen mit einer durchschnittlichen Faserlänge von < 2 mm, bevorzugt < 1 mm, vor. In der Regel beträgt die Faserlänge in einem solchen Knäuel zwischen 0,01 und 1 mm. Der Faserdurchmesser liegt zwischen ca. 2-12 µm, wobei die kleineren Durchmesser ca. 2-5 µm eher wenigen einzelnen Karbonfaserfilamenten zuzuordnen sind. In der Mehrzahl liegt ein Durchmesser zwischen 6 - 12 µm vor, wobei die Fasern aus einem oder mehreren Filamenten bestehen können. Wie bereits erwähnt, sind die wirren Knäule bei der Verarbeitung von Karbonfasern bzw. daraus hergestellten Rovings, Bänder, Schläuchen, Gewebe oder Vliesen in Filtereinrichtungen und Absaugvorrichtungen zu finden. Somit können auch feinste Karbonfaserabfälle, die in wirren Knäulen vorliegen, einer Wiederverwertung zugezogen werden. Generell ist es aber auch möglich, dass diese wirren Karbonfaserknäule z. B. durch Verwirbelung in entsprechenden Anlagen extra hergestellt werden können.
Die verwendeten wirren Knäule weisen in der Regel eine Schüttdichte von 100 g/cm³ bis 400 g/cm³, vorzugsweise 200 g/cm³ bis 300 g/cm³, auf, wobei Schüttdichten < 100 g/cm³ aufgrund des geringen Masseeintrages in das Kunststoffgranulat weniger geeignet sind.

Als härtbares Harz für das erfindungsgemäße rieselfähige Kunststoffgranulat können aus dem Stand der Technik alle bekannten insbesondere wärmehärtbaren Harze oder Reaktionsharze eingesetzt werden. Bevorzugt ist die Verwendung von duroplastischen Harzen, wie z. B. Harze auf Basis von Melaminen, Harnstoffen, Epoxiden und/oder Polyestern. Besonders bevorzugt ist, wenn ein duroplastisches Harz auf Basis von Phenol-Formaldehyd-Kondensaten verwendet wird. Diese werden durch Kondensationsreaktion einer phenolischen Verbindung mit Formaldehyd erhalten. Sie sind in der Lage bei Temperaturen zwischen 100 °C und 180 °C zu duroplastischen Materialien zu vernetzen. Als phenolische Verbindungen können insbesondere Phenol, aber auch aliphatische oder aromatisch substituierte Phenole, sowie mehrwertige Phenole. Beispiele hierfür sind Kresole, Xylenole, tert. Butyl- oder Octylphenol, Naphthole, p-Phenylphenol, Bisphenole oder Resorcin aber auch Naturstoffe, wie z. B. Tannine, Cardenol oder Cardol verwendet werden. Die phenolischen Verbindungen können als Einzelverbindungen oder im beliebigen Gemisch miteinander eingesetzt werden. Der zur Kondensation erforderliche Formaldehyd kann als solcher oder in Form einer Formaldehyd abspaltenden Substanz, wie z. B. p-Formaldehyd oder Trioxan eingesetzt werden.

Werden phenolische Verbindungen mit Formaldehyd im molaren Verhältnis von 1:0,3 bis 1:6 im alkalischen Medium umgesetzt, entstehen Resolharze. Als alkalische Katalysatoren können alle für die Resolherstellung bekannten Verbindungen verwendet werden, wie z.B. Alkali- und/oder Erdalkalihydroxide, Ammoniak, Amine oder auch Alkalimetallsulfite. Die Menge an eingesetzten Katalysator liegt in dem aus bekannten Phenolresol-Synthesen bekannten Bereich. Resole sind in der Wärme selbstvernetzende Systeme.
Wird Formaldehyd mit überschüssiger Menge an phenolischer Verbindung (1:1,2 bis 1:2) im sauren Medium (z. B. mineralische Säuren oder Oxalsäure) umgesetzt, entstehen nicht selbst härtbare Phenolharze, sogenannte Novolake. Die Vernetzung zu einem duroplastischen Material erfolgt mit Hilfe eines Härtes z. B. Hexamethylentetramin oder Resolen. Die Verwendung von Novolakharzen für das erfindungsgemäße Kunststoffgranulat hat aufgrund der Temperaturstabilität des Harzes den Vorteil, dass eine unerwünschte Vorvenetzung des Harzes beim Vermischen mit den Karbonasern vermieden wird.

Besonders bevorzugt ist, wenn das Verhältnis im erfindungsgemäßen faserverstärkten härtbaren Kunststoffgranulat von Harz zu Karbonfasern zwischen 4 : 1 und 1 : 1,5 liegt. Wird mehr an wirren Karbonfaserknäulen zugemischt, so dass das Verhältnis Harz zu Karbonfaser überschritten wird, traten während der Herstellung Verklumpungen des Gemisches auf, die am Rührer festklebten, so dass eine optimale Vermischung Harz/Karbonfaser nicht mehr gewährleistet war.
Besonders bevorzugt ist, wenn das Verhältnis Harz zu Karbonfasern zwischen 1,5 : 1 und 1 : 1,5 liegt. Dadurch kann besonders viel Abfall an wirren Karbonfaserknäulen verwertet werden, ohne dass dabei der Herstellungsprozess des erfindungsgemäßen Kunststoffgranulates beeinflusst wird.

Abgesehen von dem härtbaren Harz und den Karbonfasern kann das erfindungsgemäße Kunststoffgranulat weitere Bestandteile wie Härter (z. B. Hexamethylentetramin, Resole), Beschleuniger (Magnesiumoxid, Kalziumoxid), flammhemmende Stoffe, Pigmente und Verarbeitungshilfsmittel, wie Additive und Gleit- und Trennmittel (Stearate, Wachse) enthalten, und es kann somit für den Verwendungszweck optimiert werden.

Das erfindungsgemäße faserverstärkte härtbare Kunststoffgranulat ist rieselfähig und hat vorzugsweise eine Schüttdichte von > 600 g/cm³ , vorzugsweise 600 g/cm³ bis 1000 g/cm³. Bei einer Schüttdichte von < 600 g/cm³ wird die Rieselfähigkeit des erfindungsgemäßen Kunststoffgranulates eingeschränkt, was Probleme bei den Dosiereinrichtungen mit sich bringen kann.

Das erfindungsgemäße rieselfähige Kunststoffgranulat ist bevorzugt geeignet für die Verwendung zur Herstellung von duroplastischen Formmassen oder Bindemittel.

Werden duroplastische Formmassen aus den erfindungsgemäßen Granulaten hergestellt, können diese bevorzugt für die Automobilindustrie, Elektrotechnik und Elektronik, Maschinenbau und für die Haushaltsindustrie verwendet werden. Es konnte nämlich festgestellt werden, dass sich die mechanischen Eigenschaften im Vergleich zu Formmassen, die mit Karbonstapelfasern hergestellt werden, auf gleichem Niveau befinden. Das war überraschend, da bisher immer angenommen wurde, dass die Regellänge der Karbonfaser ausschlaggebend für die mechanischen Kennwerte des Endproduktes ist. Es war nicht zu erwarten, dass durch den Einsatz eines Abfallproduktes der Karbonfaser, nämlich in Form von wirren Knäulen mit einer durchschnittlichen Faserlänge von < 2 mm, entsprechend gleichwertige Produkte hergestellt werden können.

Die Herstellung des erfindungsgemäßen faserverstärkten härtbaren Kunststoffgranulats kann durch ein Verfahren erfolgen, folgende Schritte enthaltend:
a) Aufschmelzen eines härtbaren Harzes bei Temperaturen zwischen 60 °C und 180 °C,
b) Vermischen von Karbonfasern, die in Form von wirren Knäulen mit einer Länge von < 2 mm vorliegen, mit dem aufgeschmolzenen Harz des Schrittes a) und gegebenenfalls weiteren Bestandteilen,
c) gegebenenfalls Zerkleinerung des erkalteten Karbonfaser/Harz-Verbundes
d) gegebenenfalls Vermischen des erkalteten Karbonfaser/Harz-Verbundes mit weiteren Bestandteilen.

Das Aufschmelzen des härtbaren Harzes erfolgt bei Temperaturen zwischen 60 °C und 180 °C, bevorzugt 80 bis 120 °C, kann in herkömmlichen Schmelzaggregaten, wie Heizöfen, Extrudern oder Innenmischern durchgeführt werden (Schritt a). Dem aufgeschmolzenen Harz werden die Karbonfasern, wobei diese in Form von wirren Knäulen mit einer durchschnittlichen Faserlänge von < 2 mm, untergemischt, wobei es unerheblich ist, ob dem Harz die Karbonfasern oder den Karbonfasern das Harz untergemischt wird (Schritt b). Im Schritt b) können noch weitere Bestandteile, wie z. B weitere anorganische oder organische Füllstoffe, Pigmente und Verarbeitungshilfsmittel, wie Additive und Gleit- und Trennmittel oder auch flammhemmende Stoffe zugemischt werden. Das Vermischen erfolgt unter Verwendung eines Wirblers oder eines schnelldrehenden Rührers, damit eine gleichmäßige Verteilung der Karbonfaser im Harz erzielt wird.

Besonders bevorzugt ist, wenn dass das Aufschmelzen des härtbaren Harzes (Schritt a) und das Vermischen mit den Karbonfasern (Schritt b) in einem einzigen Mischaggregat (z. B. Innenmischer, Extruder) erfolgt. Damit wird ein verarbeitungstechnischer, logistischer und zeitlicher Vorteil bei der Herstellung des erfindungsgemäßen faserverstärkten härtbaren Kunststoffgranulats erreicht.

Wiederum von Vorteil ist, wenn für Schritt a) und/oder b) ein Eirichmischer aufgrund seiner guten Mischcharakteristik, verwendet wird, wobei der Eirichmischer bevorzugt gleichzeitig als Aufschmelz- und Mischaggregat dienen kann.

Nach Verlassen des Harz/Karbonfaser-Verbundes (mit Harz imprägnierte wirre Karbonfaserknäule) und Abkühlen, z. B. auf Raumtemperatur, kann gegebenenfalls eine Zerkleinerung dieses Verbundes erfolgen (Schritt c). Hierfür wird das Gemisch in einer Schneidmühle auf eine durchschnittliche Korngröße von ca. 1 bis 4 mm gebrochen.

Ebenfalls alternativ ist das Vermischen des abgekühlten und gegebenenfalls zerkleinerten Harz/Karbonfaser-Verbundes mit weiteren oben genannten Bestandteilen, wie Härter, Beschleuniger oder auch Pigmente und Verarbeitungshilfsmittel, wie Additive und Gleit- und Trennmittel. Insbesondere bei der Verwendung von nicht selbst härtbaren Harzen, wie z. B. Novolaken werden im Schritt d) zumindest ein Härter (z. B. Hexamethylentetramin oder Resole) und gegebenenfalls ein Beschleuniger zugesetzt.

Das entstandene erfindungsgemäße Granulat ist rieselfähig und hat bevorzugt eine Schüttdichte von > 600 g/cm³.

Anhand eines Ausführungsbeispiels soll die Erfindung näher erläutert werden:

### 1. Herstellung eines Novolakharzes:

1085 g Phenol werden geschmolzen (Schmelzpunkt: 40,8 °C), mit 5,4 g Oxalsäure versetzt und auf 100 °C erhitzt. Während zwei Stunden lässt man unter Rühren eine wässrige Formaldehyd-Lösung (548 g 45%) zulaufen. Dieser Ansatz wird fünf Stunden bei 98 °C gehalten. Die Reaktion ist stark exotherm, daher ist Kühlung notwendig. Anschließend werden die leichtflüchtigen Teile abdestilliert, bis bei 20 hPa eine Sumpftemperatur von 160 °C erreicht wird.

### 2. Herstellung eines erfindungsgemäßen rieselfähigen faserverstärkten wärmehärtbaren Kunststoffgranulats

1 kg des unter 1. hergestellten Novolakharzes wird in einem Eirichmischer auf 160 °C erwärmt. Dem aufgeschmolzenen Harz werden 1 kg Karbonfasern, wobei diese in Form von wirren Knäulen mit einer durchschnittlichen Faserlänge von < 2 mm vorliegen, zugegeben und 15 min schnell gerührt, so dass eine gute Imprägnierung der Karbonfaserknäule mit dem Harz erfolgen konnte. Zusätzlich erfolgt die Zugabe weiterer Bestandteile wir Beispielsweise 10 g Pigmentschwarz. Anschließend wurde das entstandene Granulat ausgeworfen. Nach Abkühlung auf Raumtemperatur wurde das Granulat in einer Schneidmühle auf eine Korngröße van ca. 2 mm gebrochen.

### 3. Herstellung einer Formmasse unter Verwendung des erfindungsgemäßen rieselfähigen faserverstärkten wärmehärtbaren Kunststoffgranulats:

Zu 55 g des unter 2. hergestellten Granulates wurden 2,2 g Hexamethylentetramin, 1,5 g Ca-Stearat, 10,1 g Kreide, 3,6 g Talkum und 1 g Stearinsäure gegeben und nochmals vermengt. Dieses Gemenge wird im Aufbereitungsprozess in üblichen Aggregaten (z. B. Extruder oder Mischwalzensysteme) vermischt, geknetet und granuliert. Erhalten wurde ein rieselfähiges faserverstärktes wärmehärtbares Kunststoffgranulat mit einer Schüttdichte von 500-750 g/cm³.

Dieses Kunststoffgranulat wird über eine Dosiervorrichtung in eine Form mittels Spritzgießverfahrens eingebracht und bei 180 °C unter Druck ausgehärtet. Nach dem Ausformen wurde eine Formmasse erhalten, die in keinen ihren Eigenschaften den Formmassen nachstand, bei deren Herstellung Karbonstapelfasern mit einer Länge von 4,5 mm verwendet wurden.

## Patentansprüche

1. Faserverstärktes härtbares Kunststoffgranulat, **dadurch gekennzeichnet, dass** das Granulat als Faserverstärkung Karbonfasern, die in Form von wirren Knäulen mit einer Länge von < 2 mm vorliegen, und als Kunststoff ein Harz auf der Basis von Phenol-Formaldehydkondensaten enthält, wobei das Gewichtsverhältnis Harz zu Karbonfasern zwischen 4 : 1 und 1 : 1;5 beträgt.

2. Faserverstärktes härtbares Kunststoffgranulat nach zumindest einem der vorhergehenden Ansprüche, **dadurch gekennzeichnet, dass** das Granulat weitere Bestandteile wie Härter, Beschleuniger, Pigmente und/oder Verarbeitungshilfsmittel, enthält.

3. Faserverstärktes härtbares Kunststoffgranulat nach zumindest einem der vorhergehenden Ansprüche, **dadurch gekennzeichnet, dass** die Schüttdichte des Granulates 600 g/cm³ bis 1000 g/cm³ beträgt.

4. Faserverstärktes härtbares Kunststoffgranulat nach zumindest einem der vorhergehenden Ansprüche, **dadurch gekennzeichnet, dass** der Faserdurchmesser zwischen ca. 2-12 µm, bevorzugt zwischen 6 - 12 µm liegt.

5. Verfahren zur Herstellung eines faserverstärkten härtbaren Kunststoffgranulats folgende Schritte enthaltend:
a) Aufschmelzen eines Harzes auf der Basis von Phenol-Formaldehydkondensaten bei Temperaturen zwischen 60 °C und 180 °C,
b) Vermischen von Karbonfasern, die in Form von wirren Knäulen mit einer Länge von < 2 mm vorliegen, wobei das Gewichtsverhältnis Harz zu Karbonfasern zwischen 4 : 1 und 1 : 1,5 beträgt, mit dem aufgeschmolzenen Harz des Schrittes a) und gegebenenfalls weiteren Bestandteilen,
c) gegebenenfalls Zerkleinerung des erkalteten Karbonfaser/Harz-Verbundes und
d) gegebenenfalls Vermischen des erkalteten Karbonfaser/Harz-Verbundes mit weiteren Bestandteilen.

6. Verfahren zur Herstellung eines faserverstärkten härtbaren Kunststoffgranulats nach Anspruch 5, **dadurch gekennzeichnet, dass** das Aufschmelzen des Harzes (Schritt a) und das Vermischen mit den Karbonfasern (Schritt b) in einem einzigen Mischaggregat erfolgt.

7. Verfahren zur Herstellung eines faserverstärkten härtbaren Kunststoffgranulats nach Anspruch 5, **dadurch gekennzeichnet, dass** für Schritt a) und/oder b) ein Eirichmischer verwendet wird.

8. Verwendung eines faserverstärkten härtbaren Kunststoffgranulats nach zumindest einem der Ansprüche 1 bis 4 zur Herstellung von duroplastischen Formmassen.

9. Verwendung eines faserverstärkten härtbaren Kunststoffgranulats nach Anspruch 8 zur Herstellung von duroplastischen Formmassen für die Automobilindustrie, Elektrotechnik und Elektronik, Maschinenbau und für die Haushaltsindustrie.

## Claims

1. Fibre-reinforced, curable plastics pellets **characterized in that** the fibre reinforcement of the pellets comprises carbon fibres in the form of tangled bundles having a length of < 2 mm and the plastic of the pellets comprises a resin based on phenol-formaldehyde condensates, the weight ratio of resin to carbon fibres being between 4:1 and 1:1.5.

2. Fibre-reinforced, curable plastics pellets according to at least one of the preceding claims, **characterized in that** the pellets comprise further constituents such as curing agents, accelerators, pigments and/or process aids.

3. Fibre-reinforced, curable plastics pellets according to at least one of the preceding claims, **characterized in that** the bulk density of the pellets is 600 g/cm³ to 1000 g/cm³.

4. Fibre-reinforced, curable plastics pellets according to at least one of the preceding claims, **characterized in that** the fibre diameter is between about 2-12 µm, preferably between 6-12 µm.

5. Method for producing fibre-reinforced, curable plastics pellets, comprising the following steps:
a) melting a resin based on phenol-formaldehyde condensates at temperatures between 60°C and 180°C,
b) mixing carbon fibres in the form of tangled bundles having a length of < 2 mm, the weight ratio of resin to carbon fibres being between 4:1 and 1:1.5, with the melted resin from step a) and optionally further constituents,
c) optionally comminuting the cooled carbon fibre/resin compound, and
d) optionally mixing the cooled carbon fibre/resin compound with further constituents.

6. Method for producing fibre-reinforced, curable plastics pellets according to Claim 5, **characterized in that** the melting of the resin (step a) and the mixing with the carbon fibres (step b) take place in a single mixing assembly.

7. Method for producing fibre-reinforced, curable plastics pellets according to Claim 5, **characterized in that** an Eirich mixer is used for step a) and/or b).

8. Use of fibre-reinforced, curable plastics pellets according to at least one of Claims 1 to 4 for producing thermosetting moulding compounds.

9. Use of fibre-reinforced, curable plastics pellets according to Claim 8 for producing thermosetting moulding compounds for the automotive industry, electrical engineering and electronics, mechanical engineering and for the household industry.

## Revendications

1. Granulat en plastique durcissable renforcé par des fibres, **caractérisé en ce que** le granulat contient en tant que renforcement fibreux des fibres de carbone, qui se présentent sous la forme de pelotes emmêlées d'une longueur < 2 mm et en tant que plastique une résine à base de condensats de phénol-formaldéhyde, le rapport en poids entre la résiné et les fibres de carbone étant compris entre 4:1 et 1:1,5.

2. Granulat en plastique durcissable renforcé par des fibres selon au moins l'une quelconque des revendications précédentes, **caractérisé en ce que** le granulat contient d'autres constituants, tels que des durcisseurs, des accélérateurs, des pigments et/ou des adjuvants d'usinage.

3. Granulat en plastique durcissable renforcé par des fibres selon au moins l'une quelconque des revendications précédentes, **caractérisé en ce que** la densité apparente du granulat est de 600 g/cm³ à 1 000 g/cm³.

4. Granulat en plastique durcissable renforcé par des fibres selon au moins l'une quelconque des revendications précédentes, **caractérisé en ce que** le diamètre des fibres est compris entre environ 2 et 12 µm, de préférence entre 6 et 12 µm.

5. Procédé de fabrication d'un granulat en plastique durcissable renforcé par des fibres, contenant les étapes suivantes :
a) la fusion d'une résine à base de condensats de phénol-formaldéhyde à des températures comprises entre 60 °C et 180 °C,
b) le mélange de fibres de carbone, qui se présentent sous la forme de pelotes emmêlées d'une longueur < 2 mm, le rapport en poids entre la résine et les fibres de carbone étant compris entre 4:1 et 1:1,5, avec la résine fondue de l'étape a) et éventuellement d'autres constituants,
c) éventuellement le broyage du composite fibres de carbone/résine refroidi, et
d) éventuellement le mélange du composite fibres de carbone/résine refroidi avec d'autres constituants.

6. Procédé de fabrication d'un granulat en plastique durcissable renforcé par des fibres selon la revendication 5, **caractérisé en ce que** la fusion de la résine (étape a) et le mélange avec les fibres de carbone (étape b) ont leu dans un appareil de mélange unique.

7. Procédé de fabrication d'un granulat en plastique durcissable renforcé par des fibres selon la revendication 5, **caractérisé en ce qu'**un mélangeur Eirich est utilisé pour l'étape a) et/ou b).

8. Utilisation d'un granulat en plastique durcissable renforcé par des fibres selon au moins l'une quelconque des revendications 1 à 4 pour la fabrication de matériaux de moulage duroplastiques.

9. Utilisation d'un granulat en plastique durcissable renforcé par des fibres selon la revendication 8 pour la fabrication de matériaux de moulage duroplastiques pour l'industrie automobile, la technologie électrique et électronique, la construction de machines et l'électroménager.
